**Europäisches Patentamt**

**European Patent Office**

**Office européen des brevets**

(19)

(11) Veröffentlichungsnummer: **0 186 011**
**A2**

# (12) EUROPÄISCHE PATENTANMELDUNG

(21) Anmeldenummer: **85115551.5**

(22) Anmeldetag: **06.12.85**

(51) Int. Cl.⁴: **C 08 L 67/02**
//C08K3/32, C08K5/49, C08K3/34,
(C08L67/02, 71:04, 69:00, 51:00,
25:00)

(30) Priorität: **14.12.84 DE 3445570**

(43) Veröffentlichungstag der Anmeldung:
**02.07.86 Patentblatt 86/27**

(84) Benannte Vertragsstaaten:-
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Seiler, Erhard, Dr.**
**Erpolzheimer Strasse 1**
**D-6700 Ludwigshafen(DE)**

(72) Erfinder: **Hambrecht, Juergen, Dr.**
**Werderstrasse 30**
**D-6900 Heidelberg(DE)**

(72) Erfinder: **Heinz, Gerhard, Dr.**
**Im Vogelsang 2**
**D-6719 Weisenheim(DE)**

(54) **Selbstverlöschende thermoplastische Polyesterformmassen.**

(57) Selbstverlöschende thermoplastische Polyesterformmassen, enthaltend lineare aromatische Polyester, Polyphenylenether und Zusätze, gekennzeichnet durch einen Gehalt
an

    A. 20 bis 50 Gew.% Polyethylenterephthalat und/oder
Polybutylenterephthalat, die bis zu 20 Mol.% mit anderen
Dicarbonsäuren oder Diolen modifiziert sein können,

    B. 10 bis 40 Gew.% mindestens eines Polyphenylenethers

    C. 5 bis 15 Gew.% mindestens eines Alkali- oder
Erdalkaliphosphats eines hochsiedenden Phosphorsäureesters, Phosphorigsäureesters, Phosphinsäureesters, Phosphonigsäureesters oder organischen Phosphinoxids

    D. 5 bis 30 Gew.% gerüstbildende Füllstoffe

    E. 0 bis 30 Gew.% mindestens eines aromatischen
Polycarbonats

    F. 0 bis 30 Gew.% Glasfasern

    G. 0 bis 20 Gew.% mindestens eines kautschukelastischen Polymerisats

    H. 0 bis 20 Gew.% mindestens eines Styrolpolymerisats

    wobei sich die Gewichtsprozente der Komponenten A
bis H auf 100 Gew.% ergänzen sowie

    I. gegebenenfalls Zusatzstoffe in wirksamen Mengen.

EP 0 186 011 A2

## Selbstverlöschende thermoplastische Polyesterformmassen

Thermoplastische Polyester haben eine breite Anwendung bei der Herstellung von Formteilen durch Spritzguß und Extrusion gefunden. Solche Polyesterformmassen wurden auch schon durch den Zusatz von kautschukelastischen Polymerisaten und aromatischen Polycarbonaten modifiziert, um eine verbesserte Schlagzähigkeit zu erreichen, wie aus der DE-OS 3 234 174 bekannt ist. Entsprechend der EP-Anmeldung 20605 sollen Polyesterformmassen, die mit Polycarbonaten und kautschukelastischen Polymerisaten modifiziert sind, durch einen Gehalt an Flammschutzmitteln, wie elementarem Phosphor oder Tetrabrombisphenol A ausgerüstet werden, um die Brennbarkeit zu vermindern. Der Zusatz von elementarem rotem Phosphor hat jedoch den Nachteil, daß Phosphinbildung eintritt, während bei der Verwendung von halogenierten Flammschutzmitteln im Brandfalle toxische Gase entstehen. Da sich die Anforderungen in der Technik an die zu verwendenden Polyesterformmassen fortlaufend erhöhen, erfüllen die bekannten Polyesterformmassen nicht mehr alle an sie gestellten Anforderungen.

Es war deshalb die technische Aufgabe gestellt, selbstverlöschende thermoplastische Polyesterformmassen zur Verfügung zu stellen, die sich neben einer höheren Wärmeformbeständigkeit, Chemikalienresistenz und leichteren Verarbeitbarkeit sowie verbesserten Zähigkeit dadurch auszeichnen, daß keine toxischen Additive mitverwendet werden, die ausschwitzen oder Korrosion verursachen und zudem im Brandfalle wenig toxische Rauchgase ergeben.

Diese technische Aufgabe wird gelöst durch selbstverlöschende thermoplastische Polyesterformmassen enthaltend lineare aromatische Polyester, Polyphenylenether und Zusätze gekennzeichnet durch einen Gehalt an

A.  20 bis 50 Gew.% Polyethylenterephthalat und/oder Polybutylenterephthalat, die bis zu 20 Mol.% mit anderen Dicarbonsäuren und/oder Diolen modifiziert sein können,

B.  10 bis 40 Gew.% mindestens eines Polyphenylenethers

C.  5 bis 15 Gew.% mindestens eines Alkali- oder Erdalkaliphosphats, eines hochsiedenden Phosphorsäureesters, Phosphorigsäureesters, Phosphinsäureesters, Phosphonigsäureesters oder organischen Phosphinoxids

D.  5 bis 30 Gew.% gerüstbildende Füllstoffe

Bk/P

E.  0 bis 30 Gew.% mindestens eines aromatischen Polycarbonats

F.  0 bis 30 Gew.% Glasfasern

G.  0 bis 20 Gew.% mindestens eines kautschukelastischen Polymerisats

H.  0 bis 20 Gew.% mindestens eines Styrolpolymerisats

wobei sich die Gewichtsprozente der Komponenten A bis H auf 100 Gew.% ergänzen sowie

I.  gegebenenfalls Zusatzstoffe in wirksamen Mengen.

Die neuen Formmassen haben den Vorteil, daß keine toxischen Additive mitverwendet werden und die aus den Formmassen hergestellten Formteile keine Korrosion verursachen. Ferner haben die neuen Formmassen den Vorteil, daß keine Ausblüh- oder Ausschwitzerscheinungen feststellbar sind und im Brandfall wenig toxische und aggressive Rauchgase entwickelt werden. Darüber hinaus zeichnen sich die neuen Formmassen durch gute mechanische Eigenschaften aus.

Die erfindungsgemäße Formmassen enthalten als Komponente A 20 bis 50 Gew.%, insbesondere 20 bis 35 Gew.% Polyethylenterephthalat und/oder Polybutylenterephthalat, die bis zu 20 Mol.% mit anderen Dicarbonsäuren und/oder Diolen modifiziert sein können. Als Modifizierungsmittel kommen beispielsweise aliphatische Dicarbonsäuren mit bis zu 12 Kohlenstoffatomen, cycloaliphatische Dicarbonsäuren mit 6 Ringgliedern oder aromatische Dicarbonsäuren, die sie von Benzol oder Naphthalin ableiten in Frage. Beispiele hierfür sind Adipinsäure, Sebacinsäure, Cyclohexandicarbonsäure, Isophthalsäure, 2,7-Naphthalindicarbonsäure oder 2,6-Naphthalindicarbonsäure. Geeignete Diole als Modifizierungsmittel sind insbesondere aliphatische und cycloaliphatische Diole mit bis zu 10 Kohlenstoffatomen, wie Ethylenglykol, Propylenglykol, Hexamethylenglykol, Neopentylglykol oder 1,4-Bishydroxymethylcyclohexan.

Vorteilhaft haben die verwendeten linearen thermoplastischen Polyester eine relative Viskosität von 1,35 bis 1,8. Besondere technische Bedeutung haben Polyethylenterephthalat und/oder Polybutylenterephthalat erlangt.

Als Komponente B enthalten die erfindungsgemäßen Formmassen 10 bis 40 Gew.%, insbesondere 20 bis 35 Gew.% mindestens eines thermoplastischen Polyphenylenethers. Bei den erfindungsgemäß verwandten Polyphenylenethern handelt es sich um Verbindungen auf der Basis von in o-Position zum Ethersauerstoff disubstituierten Polyphenylenoxiden, wobei der Ethersauerstoff der einen Einheit an dem Benzolkern der benachbarten Einheit gebunden ist. Vorteilhaft sind mindestens 50 Einheiten, insbesondere 55 bis 100 Einheiten miteinander verknüpft. Polyphenylenether können in o-Stellung zum Sauerstoff Halogenatome, wie Chlor- oder Bromatome Alkylreste mit bis zu 4 Kohlenstoffatomen, die kein $\alpha$-ständiges tertiäres Wasserstoffatom besitzen, Halogenalkylreste mit bis zu 4 Kohlenstoffatomen, wie Chlormethylreste oder 2-Chlorethylreste, gegebenenfalls durch Alkylreste mit bis zu 4 Kohlenstoffatomen oder durch Halogenatome substituierte Phenylreste oder Alkoxyreste mit bis zu 6 Kohlenstoffatomen als Substituenten haben. Geeignete Polyphenylether sind beispielsweise Poly-(2,6-dichlor-1,4-phenylen)ether, Poly(2,6-diphenyl-1,4-phenylen)ether, Poly(2,6-dimethoxy-1,4-phenylen)ether, Poly(2,6-dimethyl-1,4-phenylen)-ether oder Poly(2,6-dibrom-1,4-phenylen)ether. Geeignete Polyphenylenether haben vorteilhaft eine Grenzviskosität von 0,4 bis 0,7 dl/g (gemessen als 0,5 gewichtsprozentige Lösung in Chloroform bei 30°C). Besondere technische Bedeutung hat Poly(2,6-dimethyl-1,4-phenylen)ether erlangt.

Die erfindungsgemäß verwendeten Polyphenylenether sind an sich bekannt und können durch Selbstkondensation der entsprechenden 1-wertigen Phenole unter Einwirkung von molekularem Sauerstoff in Gegenwart von Katalysatoren hergestellt werden. Geeignete Verfahren werden beispielsweise beschrieben in den US-Patentschriften 3 219 625, 3 306 874, 3 306 875, 3 956 442, 3 965 069 und 3 970 851.

Als Komponente C enthalten die erfindungsgemäßen Formmassen 5 bis 15 Gew.%, insbesondere 5 bis 12 Gew.% mindestens eines Alkali- oder Erdalkaliphosphats, eines hochsiedenden Phosphorsäureesters, Phosphorigsäureesters, Phosphinsäureesters, Phosphonigsäureesters oder organischen Phosphinoxids. Geeignete Phosphate sind beispielsweise Natriumphosphat, Calciumphosphat insbesondere jedoch Polyphosphate, wie Natriumtripolyphosphat. Bevorzugte hochsiedende Phosphorsäureester, Phosphorigsäureester, Phosphinsäureesters, Phosphonigsäuresters oder organische Phosphinoxide haben einen Siedepunkt über 180°C. Bevorzugt sind Triarylphosphate, Triarylphosphite, Triarylphosphinoxide, Diaryl-mono- und diphosphonite, Diarylphosphinate sowie gemischt alkyl- und arylsubstituierte Phosphate und/oder Phosphite. Vorteilhaft verwendet man Phosphorsäureester von Alkanolen mit 5 bis 20 Kohlenstoffatomen, wie Octanol, Nonanol oder Decanol, Phenolen mit 6 bis 20 Kohlenstoffatomen wie Phenol oder Kresole, ferner Aralkanolen mit 7 bis 20 Kohlenstoffatomen wie Benzylalkohol oder Phenylethylalkohol oder deren Gemische. Bevorzugte Phosphorsäure- oder Phosphorigsäureester sind Triphenylphosphat, Trikresylphosphat, Trixylylphosphat, Trimesitylphosphat, Diphenylmesitylphosphat, Dimesitylphenylphosphat, Diphenyldodecylphosphat, Trisnonylphenylphosphit, Tris(2,6-di-t-butylphenyl)phosphit sowie Diphenyldecylphosphit.

Bevorzugte organische Phosphinoxide enthalten als Liganden vorteilhaft 3 Alkylreste mit 5 bis 20 Kohlenstoffatomen, gegebenenfalls durch Alkylreste substituierte Phenylreste mit 6 bis 20 Kohlenstoffatomen oder Aralkylreste mit 7 bis 20 Kohlenstoffatomen. Besonders bevorzugt ist Triphenylphosphinoxid.

Geeignete Phosphinsäureester enthalten als Liganden gegebenenfalls mit Alkylresten substituierte Phenylreste mit 6 bis 20 Kohlenstoffatomen. Besonders geeignet ist Diphenylphosphinat. Geeignete Phosphonigsäureester haben z.B. als Liganden sich gegebenenfalls mit Alkylresten substituierte Phenylreste mit 6 bis 20 Kohlenstoffatomen. Besonders geeignet sind Tris(2,4-di-t-butylphenyl)-phosphinat oder Bis(2,4-di-t-butylphenyl)-biphenylenphosphonit.

Die genannten Alkali- und/oder Erdalkaliphosphate, hochsiedende Phosphorsäure-, Phosphorigsäure-, Phosphonigsäure- oder Phosphinsäureester sowie Phosphinoxide können einzeln oder in Kombination miteinander angewandt werden.

Als Komponenten D enthalten die erfindungsgemäßen Formmassen 5 bis 30 Gew.%, insbesondere 10 bis 25 Gew.% gerüstbildende Füllstoffe. Vorzugsweise verwendet man anorganische gerüstbildende Füllstoffe, um das Abtropfen zu verhindern und die Verkohlung zu unterstützen. Geeignete gerüstbildende Füllstoffe sind beispielsweise Talkum, Wollastonit, Kreide, Zinksulfid, Zinkoxid, Gipsfasern, z.B. Franklin Fiber, synthetische Calciumsilikate, Kaolin, calciniertes Kaolin oder Magnesiumhydroxid. Bevorzugt sind calcinierter Kaolin, Wollastonit, Talkum oder Zinksulfid.

Zusätzlich können die erfinungsgemäßen thermoplastischen Formmassen enthalten

E.  0 bis 30 Gew.%, insbesondere 10 bis 20 Gew.% mindestens eines aromatischen Polycarbonats

F.  0 bis 30 Gew.%, insbesondere 5 bis 25 Gew.% Glasfasern

G.  0 bis 20 Gew.%, insbesondere 5 bis 10 Gew.% mindestens eines kautschukelastischen Polymerisats und

H.  0 bis 20 Gew.%, insbesondere 2 bis 10 Gew.% mindestens eines Styrolpolymerisats.

Die Gewichtsprozente der Komponenten A bis H ergänzen sich auf 100 Gew.%.

Geeignete aromatische Polycarbonate (Komponente E) gemäß der Erfindung können z.B. gemäß dem Verfahren der deutschen Patentschrift 1 300 266 durch Grenzflächenpolykondensation oder gemäß dem Verfahren der deutschen Offenlegungsschrift 1 495 730 durch Umesterung von Diphenylcarbonat mit Bisphenol A hergestellt werden. Anstelle von Bisphenol A können bis zu 30 Mol.% andere aromatische Bishydroxyverbindungen treten, insbesondere Bis(4-hydroxyphenyl)pentan-2,2, 2,6-Dihydroxynaphthalin, Bis(4-hydroxyphenyl)sulfon, Bis(4-hydroxyphenyl)ether, Bis(4-hydroxyphenyl)sulfid, Bis(4-hydroxyphenyl)methan, Bis(4-hydroxyphenyl)ethan-1,1 oder 4,4'-Dihydroxydiphenyl.

Für den erfindungsgemäßen Zweck geeignete Polycarbonate sind insbesondere solche, die eine relative Viskosität (gemessen bei 25°C an einer 0,5 gew.%igen Methylenchloridlösung) von 1,2 bis 1,5, vorzugsweise von 1,28 bis 1,40 haben. Besondere technische Bedeutung hat erlangt Polycarbonate, die sich von Bisphenol-A herleiten.

Die in der Formmasse vorliegenden Glasfasern haben im allgemeinen im Mittel eine Länge von 0,1 bis 0,5 mm, vorzugsweise von 0,15 bis 0,30 mm und einen Durchmesser bis 20 μm, vorzugsweise von 10 bis 14 μm. Besonders bevorzugt sind Glasfasern aus E-Glas. Um eine bessere Haftung zu erzielen, sind die Glasfasern vorteilhaft mit Organosilanen, wie Aminoalkylsilanen, insbesondere Aminoalkyltrialkoxysilanen, wie $\gamma$-Aminopropyltriethoxysilan beschichtet.

Geeignete kautschukelastische Polymerisate (Komponente G) sind beispielsweise Blockcopolymere aus Styrol und Butadien oder hydrierte Styrol/Butadien-Blockcopolymere. Geeignete Polymerisate werden beispielsweise beschrieben in GB-PS 985 614 (verzweigte Blockcopolymere), US-PS 3 113 986, DE-AS 12 22 260, DE-OS 2 013 263 (hydrierte Blockcopolymere), DE-PS 2 402 715 (Dreiblockcopolymere). Andere geeignete kautschukelastische Polymerisate sind z.B. aufgebaut aus Ethylen, (Meth)acrylsäure-$C_2$- bis $C_8$-Alkylestern und (Meth)acrylsäure. Bevorzugte Polymerisate enthalten 5 bis 85 Gew.% Ethylen, 20 bis 50 Gew.% eines primären oder sekundären $C_2$- bis $C_8$-Alkylesters der (Meth)acrylsäure, vorzugsweise n-Butylacrylat und 0,5 bis 10 Gew.% eines säurefunktionellen oder latentsäurefunktionellen Monomeren, z.B. Säuregruppen enthaltende Monomere, wie Methacrylsäure oder Acrylsäure oder einem Monomeren mit verkappten Säuregruppen, das unter den Konfektionierbedingungen Säuregruppen bildet, wie t-Butyl(meth)acrylat.

Geeignete sind ferner Pfropfkautschuke. Derartige kautschukartige Polymerisate sind an sich bekannt. Sie werden hergestellt aus einer Pfropfgrundlage, die durch Emulsionspolymerisation von geeigneten Monomeren, wie Butadien, Isopren, $C_2$- bis $C_8$-Alkylestern der Acrylsäure oder Methacrylsäure, gegebenenfalls unter Mitverwendung bis zu 30 Gew.% an Monomeren, die bei der Homopolymerisation harte Polymerisate liefern, wie Styrol, Acrylnitril, Methacrylsäure, Methacrylsäuremethylester, Acrylsäuremethylester erhältlich ist. Vorteilhaft ist die Pfropfgrundlage vernetzt und hat insbesondere einen Gelgehalt von über 30 Gew.%. Um eine
ausreichende Vernetzung zu bewirken, werden vorteilhaft 1 bis 10 Gew.%,
bezogen auf die Monomeren an Vernetzungsmitteln mit mehr als 2 Doppelbindungen, beispielsweise bifunktionelle Monomere, wie Butandioldiacrylat, Dicyclopentadienylacrylat oder Butadien mitverwendet. Auf die
Pfropfgrundlage werden dann Monomere aufgepfropft, z.B. $C_2$- bis $C_8$-
-Alkylester der Acrylsäure, insbesondere n-Butylacrylat, insbesondere
Monomere, die eine harte Pfropfhülle ergeben, wie Styrol, Acrylnitril
oder Methylmethacrylat, insbesondere deren Gemische. Zusätzlich hat es
sich bewährt, wenn man zur Ausbildung der Pfropfhülle Epoxidgruppen enthaltende Monomere, wie Glycidylacrylat in Mengen von 1 bis 10 Gew.%,
bezogen auf die Gesamtmenge der für die Pfropfhülle vorgesehenen Monomeren mitverwendet.

Geeignete Styrolpolymerisate (Komponente H) sind alle bekannten aus
alkenylaromatischen Monomeren aufgebauten Homo- und Copolymerisate. Bevorzugte Polymerisate leiten sich vom Styrol sowie kern- oder seitenalkylsubstituierten Styrolen ab. Besonders bevorzugte Monomere, von denen
sich die Polymeren ableiten, sind Styrol, p-Methylstyrol, $\alpha$-Methylstyrol,
deren Gemische, insbesondere Styrol. Als Comonomere werden gegebenenfalls
polare Monomere, wie Acrylnitril, Acrylsäure, (Meth)acrylsäureester von
Alkanolen mit 1 bis 8 Kohlenstoffatomen und/oder Maleinsäure ferner
N-Alkyl- bzw. N-arylsubstituierte Maleinimide verwendet. Der Anteil an
Comonomeren ist dabei so bemessen, daß die resultierenden Copolymeren mit
dem jeweiligen Polyphenylenether homogen mischbar sind, was durch einfache Versuche leicht feststellbar ist. Es können auch unpolare Comonomere, wie Butadien, Isopren oder Pentadien mitverwendet werden, die zusammen mit den oben genannten alkenylaromatischen Monomeren statistisch
oder blockartig aufgebaute Copolymere ergeben.

Beispiele für geeignete Styrolpolymerisate sind Polystyrol, Poly-p-methylstyrol, Poly-$\alpha$-methylstyrol, Styrol/$\alpha$-Methylstyrolcopolymerisate,
Styrol/Acrylnitrilcopolymerisate, Copolymerisate aus Styrol/Methylacrylat, Styrol/Butylacrylat, Styrol/Methylmethacrylat, Styrol/Butadien,
Styrol/Maleinsäureanhydrid, Styrol/Acrylnitril/Butadien, Copolymerisate
von Ethylvinylbenzol und Divinylbenzol sowie acrylharzmodifizierte
Styrol/Butadienpolymerisate. Geeignet sind auch Gemische von Homopolystyrol und den vorgenannten Copolymerisaten.

Geeignete Styrolpolymerisate sind auch mit kautschukelastischen Polymerisaten schlagzäh modifizierte Styrolpolymerisate. In der Regel enthalten
solche schlagzähe Styrolpolymerisate 2 bis 20 Gew.% eines kautschukela-

stischen Polymerisats. Bevorzugte kautschukelastische Polymerisate haben eine Glastemperatur (Tg) von kleiner 0°C, insbesondere von kleiner −20°C. Geeignete kautschukelastische Polymerisate sind neben Naturkautschuk Polybutadien, Polyisopren, Mischpolymerisate von Butadien und/oder Isopren mit Styrol, Acrylsäure-$C_2$- bis $C_8$-Alkylester oder Acrylnitril. Ferner Polymerisate von Acrylsäure-$C_2$- bis $C_8$-Alkylester, Polyisobutylen und kautschukelastische Copolymerisate aufgebaut aus Ethylen, Propylen und Dienen.

Die erfindungsgemäßen Formmassen können als weitere Komponente I alle Zusatz- und/oder Hilfsstoffe in wirksamen Mengen enthalten, wie sie für thermoplastische Formpolymere üblich und gebräuchlich sind. Als solche Zusatz- und/oder Hilfsstoffe seien beispielsweise genannt: Farbstoffe oder Pigmente, Antistatika, Antioxidantien, Gleit- und Entformungsmittel.

Die erfindungsgemäßen thermoplastischen Formmassen stellt man vorteilhaft her, indem man die Polymerisate im schmelzflüssigen Zustand, z.B. bei einer Temperatur von 260 bis 330°C zusammen mit den übrigen Komponenten mischt. Geeignete Mischvorrichtungen sind beispielsweise Extruder oder Kneter.

Die erfindungsgemäßen Formmassen eignen sich zur Herstellung von Formteilen durch Spritzguß oder Extrusion.

Der Gegenstand der Erfindung sei an folgenden Beispielen veranschaulicht.

Beispiele 1 bis 5

Ein thermoplastischer Polyester (Komponente A), Polyphenylenether (Komponente B), Flammschutzmittel (Komponente C) und gerüstbildende Füllstoffe (Komponente D) werden in einem Zweiwellenextruder bei einer Temperatur von 280-300°C gemischt, gegebenenfalls unter Zusatz von aromatischen Polycarbonaten (Komponente E), Glasfasern (Komponente F), kautschukelastischen Polymerisaten (Komponente G) oder Styrolpolymerisaten (Komponente H). Die Zusammensetzung der einzelnen thermoplastischen Polyesterformmassen ist aus nachfolgender Tabelle 1 zu entnehmen, während die erzielten Eigenschaften der Formmassen aus Tabelle 2 hervorgeht.

Tabelle 1

| Gew.% | Beispiele | | | | |
|---|---|---|---|---|---|
| | 1 | 2 | 3 | 4 | 5 |
| Polybutylenterephthalat | 35 | – | 25 | 20 | 30 |
| Polyethylenterepthalat | – | 30 | – | 10 | – |
| Polycarbonat | – | 10 | 15 | 20 | 10 |
| PPE | 30 | 25 | 25 | 20 | 35 |
| Triphenylphosphat | 5 | 5 | 5 | 5 | 8 |
| Trisnonylphenylphosphit | 1 | – | – | – | 2 |
| Calc. Kaolin sil. | – | 15 | – | 10 | – |
| Wollastonit sil. | 10 | – | 15 | – | 15 |
| Glasfasern | 10 | 10 | 10 | 10 | – |
| Cariflex TR 1102 SBS 3-Blockcopolymer | 5 | – | – | – | – |
| n-Butylacrylat/SAN Pfropfkautschuk | – | 5 | – | 5 | – |
| Butadien/SAN Pfropfkautschuk | – | – | 5 | – | – |
| HIPS enthaltend 8 Gew.% Polybutadien | 4 | – | – | – | – |
| | 100 | 100 | 100 | 100 | 100 |

O.Z. 0050/37494

Tabelle 2 (phys. Eigenschaften)

| Beispiel | Glührück-stand % | MFI 250°C/2,16 kg | Vicat/B [°C] | Gesamt-Brennzeit (5 Stäbe) [sec] 1/8" | / 1/16" | R [N/mm$^2$] | $a_n$ [KJ/m$^2$] | $E_Z$ [N/mm$^2$] |
|---|---|---|---|---|---|---|---|---|
| 1 | 22,8 | 4,5 | 165 | 38 (V-0) | / 101 (V-1) | 55 | 22 | 5700 |
| 2 | 26,3 | 5,8 | 158 | 52 (V-0) | / 131 (V-1) | 59 | 17 | 5900 |
| 3 | 26,1 | 2,9 | 161 | - | | - | - | 6100 |
| 4 | 22,5 | 4,8 | 162 | - | | - | - | 5300 |
| 5 | 17,2 | 5,2 | 148 | 22 (V-0) | / 58 (V-0) | 38 | 12 | 4800 |

Meßmethode Gesamtbrennzeit: UL-94 (Underwriters Laboratories), $R$: Reißfestigkeit (DIN 53 455)

MFI: melt flow index

$a_n$: Schlagzähigkeit (DIN 53 453), $E_Z$: Elastizitätsmodul im Zugversuch (DIN 53 455)

0186011

## Patentansprüche

1. Selbstverlöschende thermoplastische Polyesterformmassen, enthaltend lineare aromatische Polyester, Polyphenylenether und Zusätze, gekennzeichnet durch einen Gehalt an

A. 20 bis 50 Gew.% Polyethylenterephthalat und/oder Polybutylenterephthalat, die bis zu 20 Mol.% mit anderen Dicarbonsäuren und/oder Diolen modifiziert sein können,

B. 10 bis 40 Gew.% mindestens eines Polyphenylenethers

C. 5 bis 15 Gew.% mindestens eines Alkali- oder Erdalkaliphosphats eines hochsiedenden Phosphorsäureesters, Phosphorigsäureesters, Phosphinsäureesters, Phosphonigsäureesters oder organischen Phosphinoxids

D. 5 bis 30 Gew.% gerüstbildende Füllstoffe

E. 0 bis 30 Gew.% mindestens eines aromatischen Polycarbonats

F. 0 bis 30 Gew.% Glasfasern

G. 0 bis 20 Gew.% mindestens eines kautschukelastischen Polymerisats

H. 0 bis 20 Gew.% mindestens eines Styrolpolymerisats

wobei sich die Gewichtsprozente der Komponenten A bis H auf 100 Gew.% ergänzen sowie

I. gegebenenfalls Zusatzstoffe in wirksamen Mengen.

2. Formmassen nach Anspruch 1, dadurch gekennzeichnet, daß sie als Komponente B Poly(2,6-dimethyl-1,4-phenylen)ether enthalten.

3. Formmassen nach den Ansprüchen 1 und 2, dadurch gekennzeichnet, daß sie als Komponente C Natriumtripolyphosphat, Triarylphosphate, Triarylphoshite, Triarylphosphinoxide, Diaryl-mono- und -diphosphonite, Diarylphosphinate, gemischte alkyl- und arylsubstituierte Phosphate und/oder Phosphite enthalten.

4. Formmassen nach den Ansprüchen 1 bis 3, dadurch gekennzeichnet, daß sie als Komponente D calciniertes Kaolin und/oder Wollastonit enthalten.

5. Thermoplastische Formmassen nach den Ansprüchen 1 bis 4, dadurch gekennzeichnet, daß sie als Komponente E ein aromatisches Polycarbonat, das sich von Bisphenol-A ableitet, enthalten.

6. Thermoplastische Formmassen nach den Ansprüchen 1 bis 5, dadurch gekennzeichnet, daß sie als Komponente G einen mit Styrol und Acrylnitril gepfropften n-Butylacrylatkautschuk enthalten.

7. Formmassen nach den Ansprüchen 1 bis 5, dadurch gekennzeichnet, daß sie als Komponente G einen mit Styrol und Acrylnitril gepfropften Polybutadienkautschuk enthalten.

8. Formmassen nach den Ansprüchen 1 bis 5, dadurch gekennzeichnet, daß sie als Komponente G einen mit Methylmethacrylat gepfropften Polybutadienkautschuk enthalten.

9. Formmassen nach den Ansprüchen 1 bis 5, dadurch gekennzeichnet, daß sie als Komponente G einen mit Styrol und/oder Styrol/Acrylnitril und in einer zweiten Stufe mit Methylmethacrylat gepfropften Polybutadienkatuschuk enthalten.

10. Formmassen nach den Ansprüchen 1 bis 9, dadurch gekennzeichnet, daß sie als Komponente H Polystyrol mit einem Gehalt von 2 bis 20 Gew.% eines kautschukelastischen Polymeren, mit einer Glastemperatur unter 0°C enthalten.